(19) Europäisches Patentamt
European Patent Office
Office européen des brevets

(11) **EP 4 693 124 A1**

(12) **EUROPEAN PATENT APPLICATION**
published in accordance with Art. 153(4) EPC

(43) Date of publication:
**11.02.2026 Bulletin 2026/07**

(21) Application number: **24778734.4**

(22) Date of filing: **09.02.2024**

(51) International Patent Classification (IPC):
**G06Q 10/047** (2023.01)      **G06Q 50/40** (2024.01)

(52) Cooperative Patent Classification (CPC):
**G06Q 10/047; G06Q 50/40**

(86) International application number:
**PCT/JP2024/004565**

(87) International publication number:
**WO 2024/202589 (03.10.2024 Gazette 2024/40)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **24.03.2023   JP 2023048376**

(71) Applicant: **Hitachi, Ltd.
Tokyo 100-8280 (JP)**

(72) Inventors:
• **TOJO MATSUMOTO, Toshiko
  Tokyo 100-8280 (JP)**
• **FURUYA, Naoki
  Tokyo 100-8280 (JP)**
• **SHIMOMURA, Maho
  Tokyo 100-8280 (JP)**
• **FURUYA, Soichi
  Tokyo 100-8280 (JP)**

(74) Representative: **MERH-IP Matias Erny Reichl
Hoffmann
Patentanwälte PartG mbB
Paul-Heyse-Straße 29
80336 München (DE)**

(54) **COMPUTER SYSTEM AND METHOD FOR GENERATING DELIVERY PLAN**

(57)    A computer system receives a reservation for transport of cargo, the reservation including a departure point and a destination, searches for a path including a combination of routes from the departure point to the destination, generates a path graph including location nodes corresponding to intermediate points of the path and a route edge connecting the intermediate points between which a vehicle is movable using a corresponding one of the routes, generates a search-use graph from the path graph, and generates a delivery plan including a waypoint, a route, and an operation schedule by using the search-use graph. Costs representing degrees of satisfaction of respective requirements of a requester, a business operator, and a passenger are set for the edge of the search-use graph.

FIG.7

```
                    START
                      │
S201 │ SELECT RESERVATION INFORMATION
     │         FOR CARGO
                      │
S202 │ SEARCH FOR PATH CAPABLE OF TRANSPORTING
     │     CARGO AND GENERATE PATH GRAPH
                      │
S203 │      GENERATE PAIR OF NODES
                      │
S204 │      GENERATE SEARCH-USE PAIRS
                      │
S205 │ SEARCH FOR COMBINATION OF CONNECTABLE
     │   SEARCH-USE PAIRS AND SET EDGES
                      │
S206 │      GENERATE SEARCH-USE GRAPH
                      │
S207 │   ADD NODES FOR DEPARTURE POINT
     │     AND DESTINATION OF DELIVERY
                      │
S208 │      OPTIMIZE SEARCH-USE GRAPH
                      │
S209 │ SET COST FOR EDGES OF SEARCH-USE GRAPH
                      │
S210 │      EXECUTE PATH SEARCH AND
     │      GENERATE DELIVERY PLAN
                      │
S211 ◇ HAS PROCESSING FOR ALL
     NO   PIECES OF CARGO BEEN
           COMPLETED?
              │ YES
S212 │   GENERATE DISPLAY INFORMATION
                      │
S213 │    OUTPUT DISPLAY INFORMATION
                      │
                    END
```

**EP 4 693 124 A1**

## Description

Incorporation by Reference

This application claims priority based on Japanese Patent Application No. 2023-48376, filed on March 24, 2023, the content of which is hereby incorporated by reference into this application.

Technical Field

The present invention relates to a system configured to support generation of delivery plans associated with combined passenger and cargo transportation.

Background Art

While shortage of personnel of delivery operators has become a social issue, revenues of public transportation businesses have been decreasing due to a decrease in passengers, making maintenance of regional transportation a challenge. In view of this, as an initiative to address the decrease in passengers, a reduction in carbon dioxide, and the like, combined passenger and cargo transportation using public transportation systems has attracted attention. There is a demand for a delivery plan formulation technology for supporting the operation of vehicles meeting the requirements of all parties including transportation operators, passengers, and cargo transport requesters.

In response to this, technologies for formulating delivery plans for combined passenger and cargo transportation have been known. In Patent Document 1, an on-demand combined passenger and cargo transportation system formulates a delivery plan that prioritizes one type of user: either passengers or cargo transport requesters.

Prior Art Document

Patent Document

Patent Document 1: JP-2017-220090-A

Summary of the Invention

Problems to be Solved by the Invention

The delivery plan formulated in Patent Document 1 described above results in vehicle operation biased toward one type of user: either passengers or cargo transport requesters. Further, the requirements of transportation operators and transport involving a plurality of transportation operators are not considered.

It is an object of the present invention to provide a system configured to quantitatively evaluate the degrees of fulfillment of requirements of three parties including passengers, cargo transport requesters, and a plurality of transportation operators and support generation of delivery plans for cargo meeting the requirements of the three parties as much as possible.

Means for Solving the Problems

A representative example of the invention disclosed in the present application is as follows. That is, there is provided a computer system configured to generate a delivery plan for cargo using a vehicle configured to transport a passenger and cargo. The computer system includes at least one computer including a processor, a storage device connected to the processor, and a network interface connected to the processor. The computer system is communicably connected to a first terminal that is operated by a requester who requests transport of cargo and a second terminal that is operated by a business operator who provides a transport service using a vehicle, the computer system is configured to retain route information regarding routes of the vehicle that is operated by the business operator, the computer system is configured to execute first processing of receiving a reservation for transport of cargo, the reservation including a departure point and a destination, second processing of searching for a path including a combination of the routes from the departure point to the destination on the basis of the route information and generating a path graph including location nodes corresponding to intermediate points of the path and a route edge connecting the intermediate points between which the vehicle is movable using a corresponding one of the routes, third processing of generating a search-use graph from the path graph, and fourth processing of generating a delivery plan including a waypoint, a route, and an operation schedule with use of the search-use graph. In the third processing, the computer system is configured to generate, on the basis of the path graph and the route information, the search-use graph which includes a node and an edge that correspond to an operation schedule of a corresponding one of the routes and a transfer between the routes and in which a first cost representing a degree of satisfaction of a requirement of the requester, a second cost representing a degree of satisfaction of a requirement of the business operator, and a third cost representing a degree of satisfaction of a requirement of the passenger are set for the edge. In the fourth processing, the computer system is configured to search for a path from the search-use graph on the basis of an evaluation index that is calculated using the first cost, the second cost, and the third cost which are set for the edge and that represents a degree of comprehensive satisfaction of the passenger, the requester, and the business operator, generate the delivery plan with use of the path searched, and transmit the delivery plan to the second terminal.

Advantages of the Invention

According to the present invention, it is possible to quantitatively evaluate the degrees of fulfillment of requirements of three parties including passengers, cargo transport requesters, and transportation operators and support generation of delivery plans for cargo meeting the requirements of the three parties as much as possible. Problems, configurations, and effects other than those described above are clarified in the following description of embodiments.

Brief Description of the Drawings

[FIG. 1]

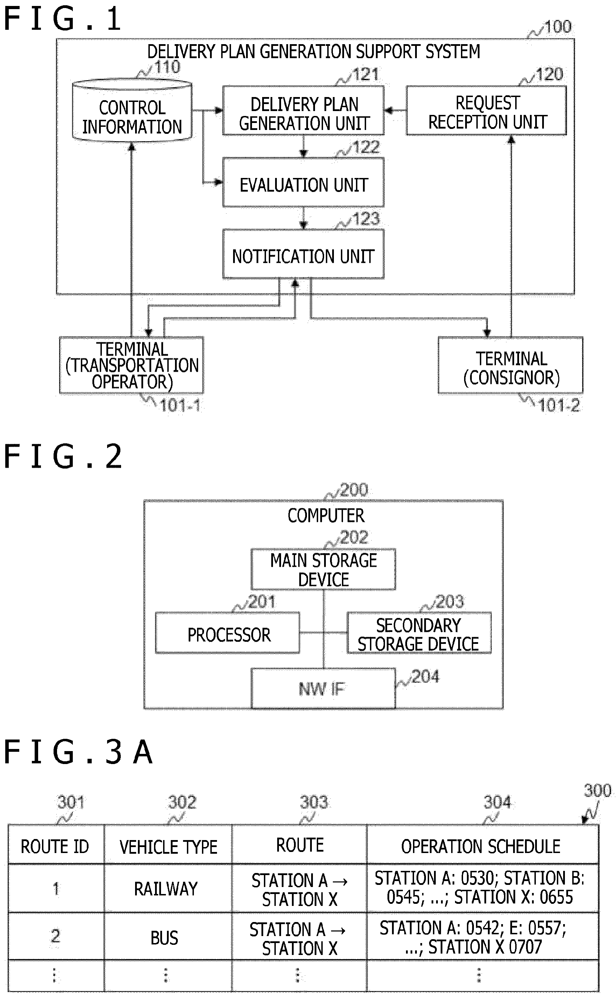

FIG. 1 is a diagram illustrating a configuration example of a system of Embodiment 1.
[FIG. 2]
FIG. 2 is a diagram illustrating an example of a hardware configuration of a computer forming a delivery plan generation support system of Embodiment 1.
[FIG. 3A]
FIG. 3A is a diagram illustrating an example of information that is stored as control information of Embodiment 1.
[FIG. 3B]

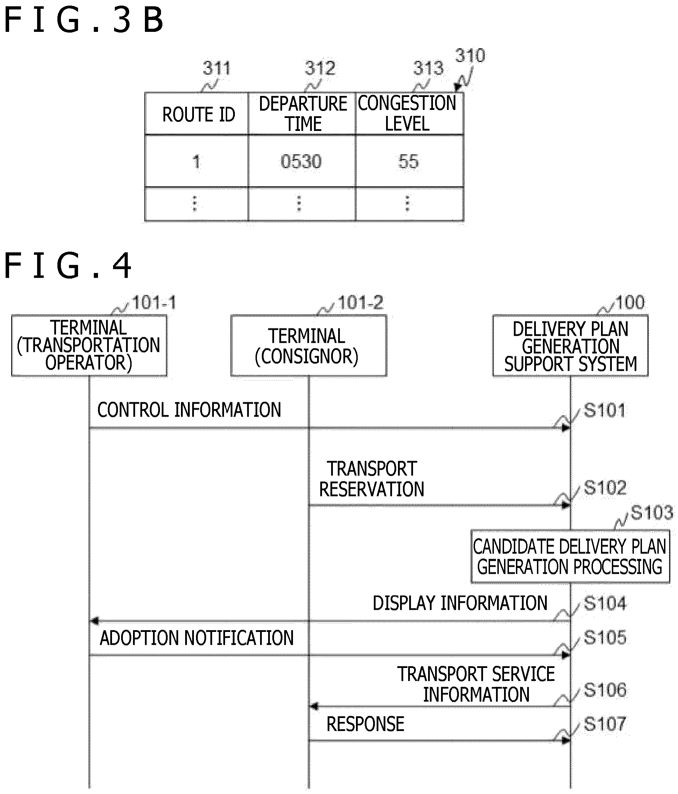

FIG. 3B is a diagram illustrating an example of information that is stored as control information of Embodiment 1.
[FIG. 4]
FIG. 4 is a sequence diagram illustrating a flow of processing in the system of Embodiment 1.
[FIG. 5]

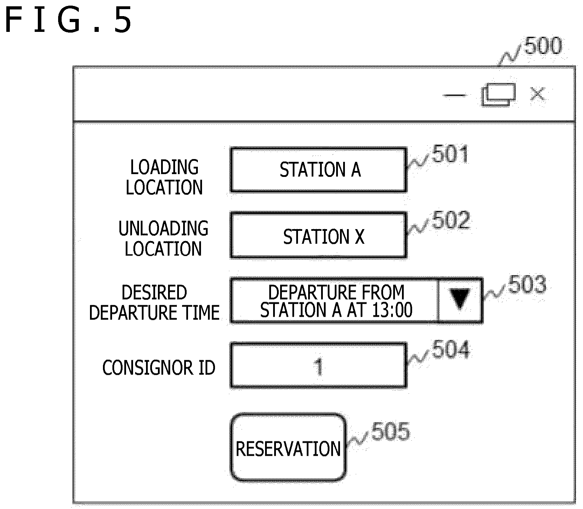

FIG. 5 is a diagram illustrating an example of a reservation screen that is displayed on a terminal of Embodiment 1.
[FIG. 6]

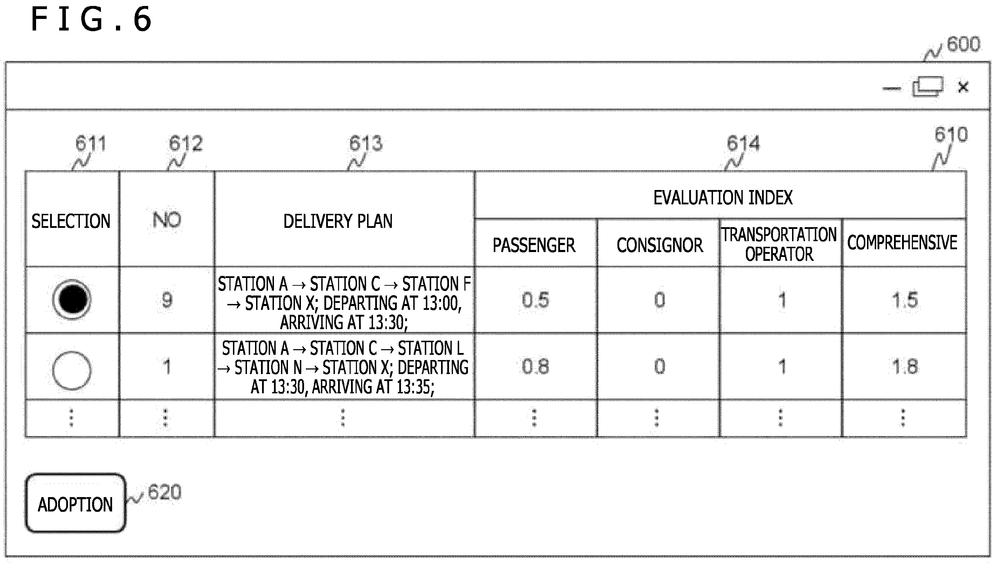

FIG. 6 is a diagram illustrating an example of a delivery plan selection screen that is displayed on the terminal of Embodiment 1.
[FIG. 7]

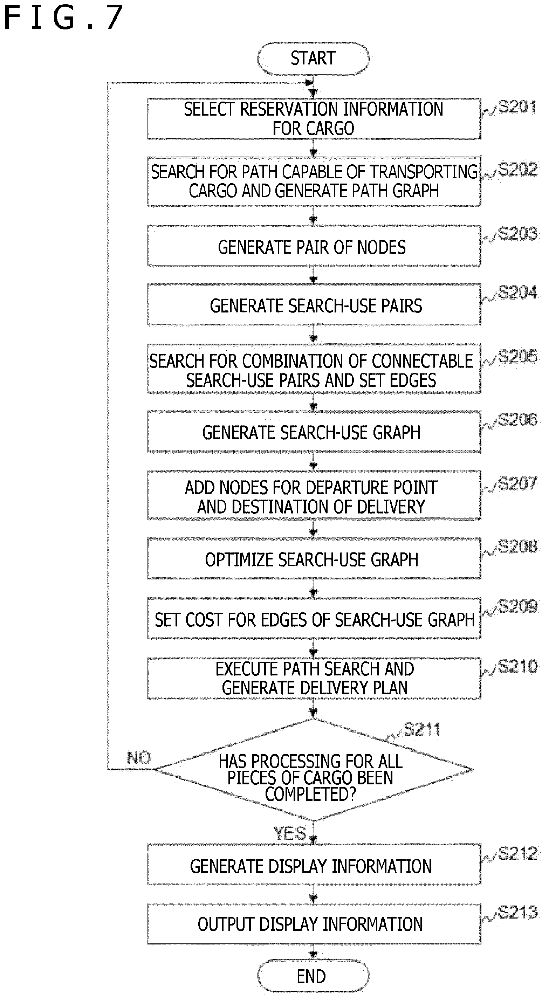

FIG. 7 is a flowchart illustrating an example of candidate delivery plan generation processing that is executed by the delivery plan generation support system of Embodiment 1.
[FIG. 8]

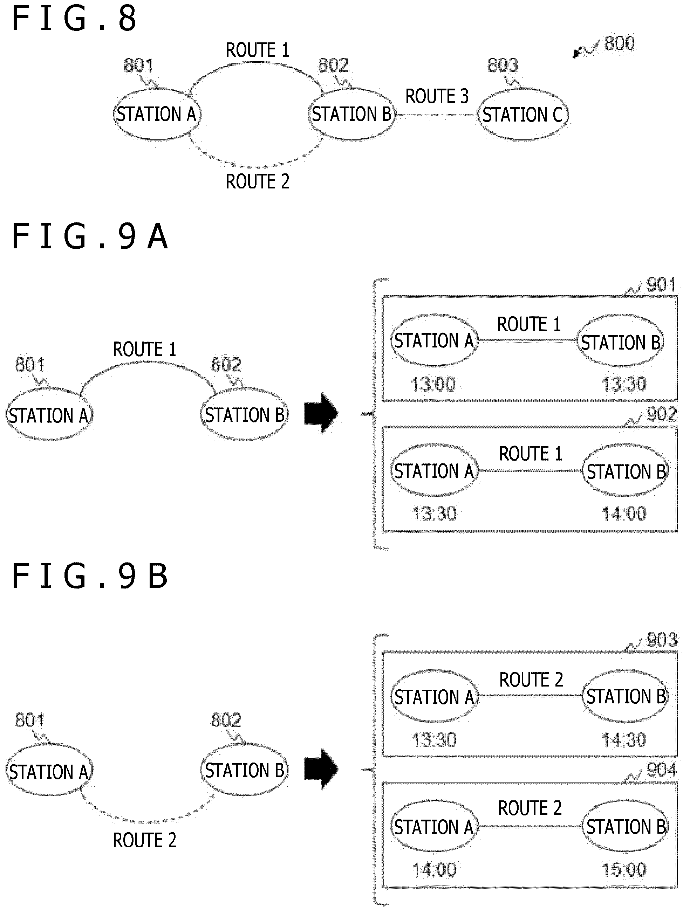

FIG. 8 is a diagram illustrating a specific example of a method for generating a delivery plan by the delivery plan generation support system of Embodiment 1.
[FIG. 9A]
FIG. 9A is a diagram illustrating a specific example of the method for generating a delivery plan by the delivery plan generation support system of Embodiment 1.
[FIG. 9B]
FIG. 9B is a diagram illustrating a specific example of the method for generating a delivery plan by the delivery plan generation support system of Embodiment 1.

[FIG. 9C]

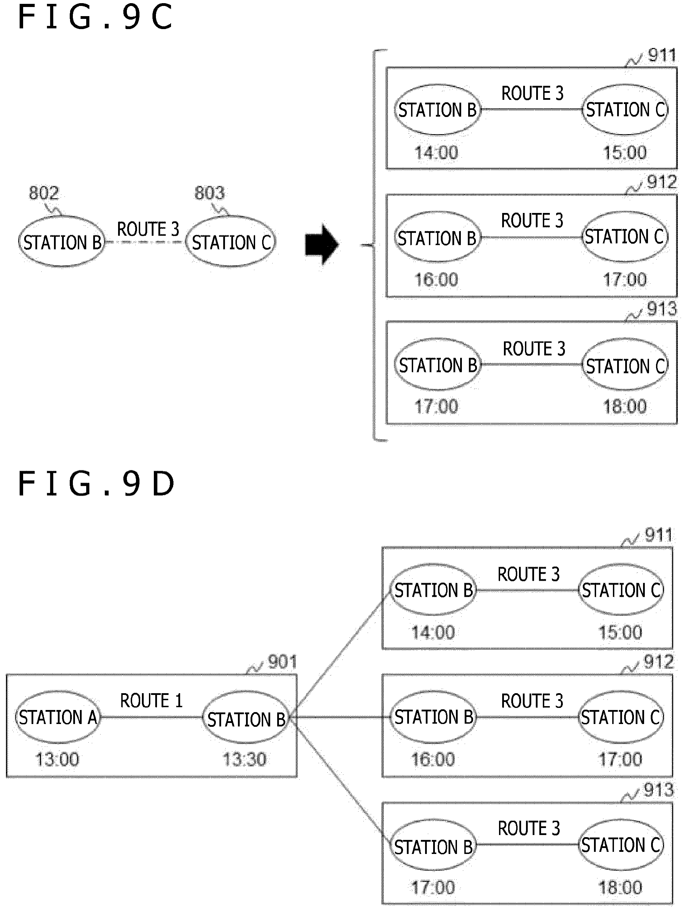

FIG. 9C is a diagram illustrating a specific example of the method for generating a delivery plan by the delivery plan generation support system of Embodiment 1.
[FIG. 9D]
FIG. 9D is a diagram illustrating a specific example of the method for generating a delivery plan by the delivery plan generation support system of Embodiment 1.
[FIG. 9E]

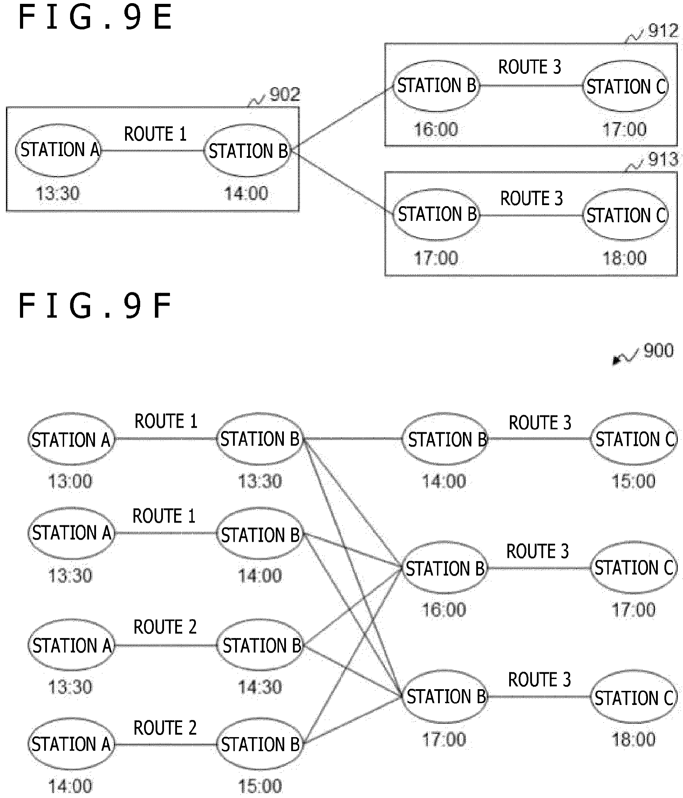

FIG. 9E is a diagram illustrating a specific example of the method for generating a delivery plan by the delivery plan generation support system of Embodiment 1.
[FIG. 9F]
FIG. 9F is a diagram illustrating a specific example of the method for generating a delivery plan by the delivery plan generation support system of Embodiment 1.
[FIG. 9G]

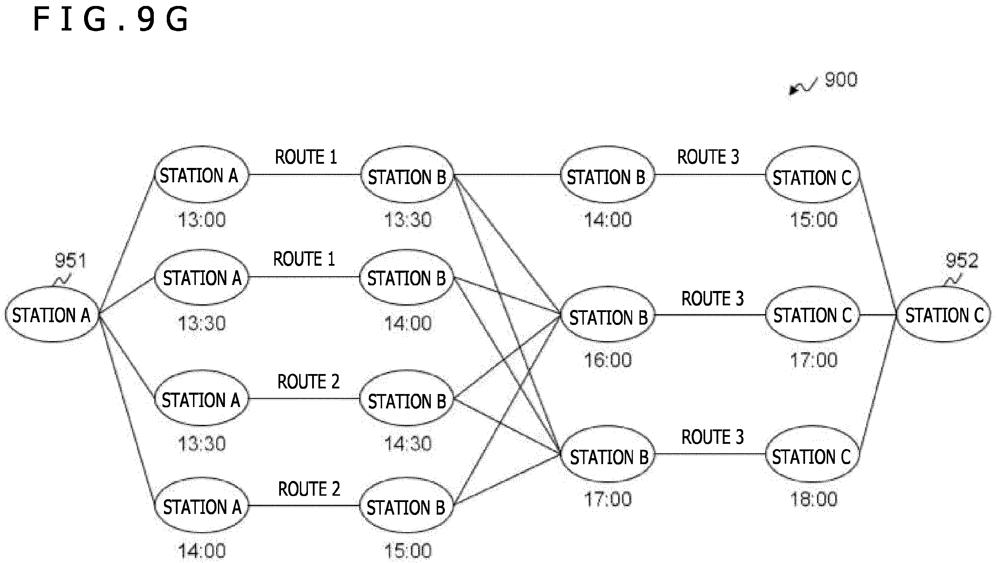

FIG. 9G is a diagram illustrating a specific example of the method for generating a delivery plan by the delivery plan generation support system of Embodiment 1.
[FIG. 10]

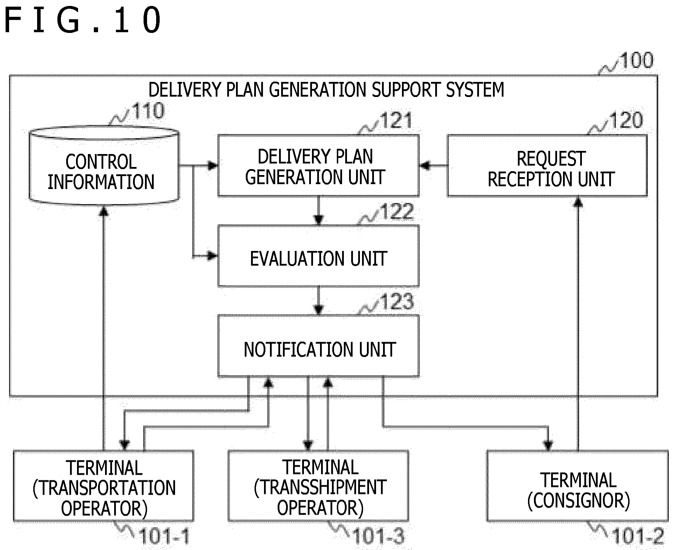

FIG. 10 is a diagram illustrating a configuration example of a system of Embodiment 2.
[FIG. 11]

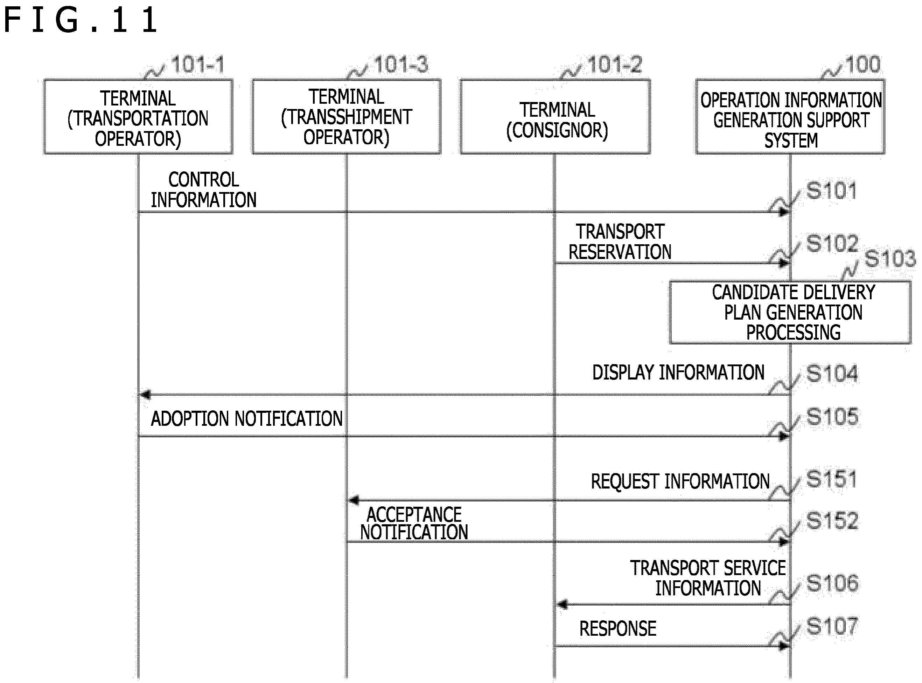

FIG. 11 is a sequence diagram illustrating a flow of processing in the system of Embodiment 2.

Modes for Carrying Out the Invention

Now, embodiments are described using the drawings. Note that, in the drawings, identical reference numerals denote identical or corresponding parts. Further, the present invention is not limited to the illustrated examples. It will readily be understood by those skilled in the art that the specific configurations of the present invention may be modified without departing from the spirit or gist of the present invention.

[Embodiment 1]

Embodiment 1 according to the present invention is described using FIG. 1 to FIG. 9.
FIG. 1 is a diagram illustrating a configuration example of a system of Embodiment 1. FIG. 2 is a diagram illustrating an example of a hardware configuration of a computer forming a delivery plan generation support system of Embodiment 1.
The system includes a delivery plan generation support system 100 and a plurality of terminals 101. The delivery plan generation support system 100 is connected to each of the terminals 101 via a network such as a LAN (Local Area Network) or a WAN (Wide Area Network). The connection of the network may be established either in a wired manner or in a wireless manner.

In Embodiment 1, it is assumed that a transportation operator provides transport services using vehicles such as route buses and trains. The vehicles are assumed to move along fixed paths in accordance with operation schedules. Further, it is assumed that the transportation operator provides transport services for picking up and delivering cargo at stations and stops.

The terminal 101 is a terminal that is operated by a user who uses the delivery plan generation support system 100, and includes a processor, a storage device, a network interface, an input device, and an output device, which are not illustrated. In the present embodiment, there are a terminal 101-1 that is operated by the transportation operator and a terminal 101-2 that is operated by a consignor. Note that the consignor is an example of a cargo transport requester and is not limited thereto. For example, the consignor may be a delivery operator. Further, it is assumed that there are a plurality of transportation operators and consignors.

The delivery plan generation support system 100 of Embodiment 1 supports generation of delivery plans for cargo using the vehicles that are operated by the transportation operator who provides transport services. Note that the transportation operator is an example of the system operator, and the system operator is not limited thereto. For example, the operator may include a plurality of transportation operators, a delivery operator, or an independent business operator. Here, a delivery plan is information including a delivery path, a cargo pickup location and delivery location, a delivery schedule, and the like. The delivery plan generation support system 100 includes at least one computer 200. The computer 200 includes a processor 201, a main storage device 202, a secondary storage device 203, and a network interface 204. The hardware elements are connected to each other via a bus. Note that the computer 200 may include input devices such as a keyboard, a mouse, and a touch panel and output devices such as a display and a printer.

The processor 201 executes programs stored in the main storage device 202. By executing processing in accordance with any of the programs, the processor 201 operates as a functional unit (module) configured to achieve a specific function. In the following description, when processing is described using a functional unit as the subject, it indicates that the processor 201 is executing the program for achieving the functional unit.

The main storage device 202 is a storage device such as a DRAM (Dynamic Random Access Memory) and stores the programs executed by the processor 201 and data used by the programs. The main storage device 202 is also used as a work area. The secondary storage device 203 is a storage device such as an HDD (Hard Disk Drive) and an SSD (Solid State Drive) and stores data persistently.

Note that the programs and data stored in the main storage device 202 may be stored in the secondary storage device 203. In this case, the processor 201 reads the programs and the data from the secondary storage device 203 and loads the programs and the data into the main storage device 202.

The delivery plan generation support system 100 retains control information 110 and includes a request reception unit 120, a delivery plan generation unit 121, an evaluation unit 122, and a notification unit 123. The control information 110 is information that is used for generating delivery plans.

As the control information 110, route information 300 (see FIG. 3A) for managing the paths of route buses and trains, congestion level information 310 (see FIG. 3B) for managing route congestion levels, and control parameters are stored.

The transportation operator registers the control information 110 in the delivery plan generation support system 100 by using the terminal 101-1. Note that a control parameter includes, for example, a weight and a threshold described later.

The request reception unit 120 receives requests for the transport of cargo. The delivery plan generation unit 121 generates candidates of delivery plans (candidate delivery plans). The evaluation unit 122 calculates evaluation indices indicating the degrees of fulfillment of requirements of transportation operators, passengers, and consignors for candidate delivery plans, and narrows down the candidate delivery plans by using the evaluation indices. The notification unit 123 transmits information to the terminal 101 and receives responses to the presented information.

Note that, regarding each functional unit included in the delivery plan generation support system 100, a plurality of functional units may be combined into a single functional unit, or a single functional unit may be divided into a plurality of functional units on the basis of functions.

FIG. 3A and FIG. 3B are diagrams illustrating examples of information that are stored as the control information 110 of Embodiment 1.

FIG. 3A is information illustrating an example of the route information 300. FIG. 3B is a diagram illustrating an example of the congestion level information 310.

The route information 300 stores data including "route ID 301," "vehicle type 302," "route 303," and "operation schedule 304." A single piece of data is provided for a single route.

The route ID 301 is a field for storing identification information for uniquely identifying a route. The vehicle type 302 is a field for storing the type of a vehicle. The route 303 is a field for storing a departure point and a destination of a route. The operation schedule 304 is a field for storing an operation schedule of a route connecting a departure point to a destination. The operation schedule 304 stores a departure time at a departure point and arrival times at an intermediate point and a destination.

The congestion level information 310 stores data including "route ID 311," "departure time 312," and "congestion level 313." A single piece of data is provided for a combination of a route and a departure time (operation schedule).

The route ID 311 is a field that is identical to the route ID 301. The departure time 312 is a field for storing a departure time at a departure point. The congestion level 313 is a field for storing a congestion level indicating the degree of seat availability in a vehicle operated as per an operation schedule. Note that, in the present embodiment, a single congestion level is stored for each vehicle; however, congestion levels for each intermediate point of each vehicle and congestion levels for each vehicle may be stored.

Further, the delivery plan generation support system 100 may retain information on an inference model configured to output congestion levels, instead of the congestion level information 310. The inference model receives, for example, routes, departure times, weather, seasons, and the like as input, and outputs congestion levels.

In addition to these, the control information includes route information for creating route diagrams. The route information may be data of any format as long as it indicates locations and connections between the locations.

FIG. 4 is a sequence diagram illustrating a flow of processing in the system of Embodiment 1. FIG. 5 is a diagram illustrating an example of a reservation screen that is displayed on the terminal 101 of Embodiment 1. FIG. 6 is a diagram illustrating an example of a delivery plan selection screen that is displayed on the terminal 101 of Embodiment 1.

The delivery plan generation support system 100 presents an interface for registering control information. The transportation operator registers control information in the delivery plan generation support system 100 by using the terminal 101-1 (Step S101).

The consignor makes a reservation for the transport of cargo by using the terminal 101-2 (Step S102). For example, the delivery plan generation support system 100 presents, on the terminal 101-2, a reservation screen 500 as illustrated in FIG. 5. The reservation screen 500 includes input sections 501, 502, 503, and 504 and a reservation button 505.

The input section 501 is a section for inputting a loading location. The input section 502 is a section for inputting an unloading location. The input section 503 is a section for inputting a departure time. The input section 504 is a section for inputting consignor identification information. Identification information issued by the transportation operator is stored. The reservation button 505 is an operation button for transmitting reservation information including values input in the input sections 501, 502, 503, and 504. In the present embodiment, a transport reservation is made by specifying a cargo departure time, but other reservation formats may be used, such as specifying an arrival time or specifying a time slot. Further, an intermediate point may be specified.

The delivery plan generation support system 100 executes candidate delivery plan generation processing (Step S103). Details of the candidate delivery plan generation processing are described using FIG. 7.

The delivery plan generation support system 100 transmits display information output as a processing result of the candidate delivery plan generation processing, to the terminal 101-1 operated by the transportation operator (Step S104).

On the terminal 101-1, a delivery plan selection screen 600 as illustrated in FIG. 6 is displayed. The delivery plan selection screen 600 includes a table 610 and an adoption button 620. The table 610 is a table for displaying candidate delivery plans generated and narrowed down by the delivery plan generation support system 100, and stores data including "selection 611," "NO 612," "delivery plan 613," and "evaluation index 614." A single piece of data is provided for a single candidate delivery plan.

The selection 611 is a field for displaying a radio button for selecting a candidate delivery plan to be adopted. The NO 612 is a field for storing the identification number of a candidate delivery plan. The delivery plan 613 is a field for storing specific contents of a candidate delivery plan. The delivery plan 613 of Embodiment 1 stores a delivery path, a departure time at a departure point, an arrival time at a final destination, and the like. The evaluation index 614 is a group of fields for storing evaluation indices. As described later, evaluation indices for each of passengers, consignors, and transportation operators are calculated, and a comprehensive evaluation index is calculated on the basis of the evaluation indices of the three parties. The adoption button 620 is an operation button for making a notification of the adoption of a candidate delivery plan selected in the selection 611.

When the transportation operator operates the adoption button 620, the terminal 101-1 transmits an adoption notification including the identification number of the candidate delivery plan selected by the transportation operator to the delivery plan generation support system 100 (Step S105).

The delivery plan generation support system 100 transmits transport service information including, for example, the departure time at the loading location and the arrival time at the unloading location to the terminal 101-2 (Step S106).

The consignor checks the contents of the transport service information, and operates the terminal 101-2 to transmit a response to the delivery plan generation support system 100 (Step S107). If the consignor agrees with the contents of the presented transport service, the consignor transmits a response to confirm the reservation. If the consignor does not agree with the contents of the presented transport service, the consignor transmits a response to cancel the reservation. When receiving a reservation cancellation, the delivery plan generation support system 100 may delete the delivery of the cargo in question.

Note that the delivery plan generation support system 100 manages the maximum number of cargo items that can be accommodated for each transport service, and performs control so as not to receive requests when the maximum number is reached. Further, when the user cannot use a desired transport service, the delivery plan generation support system 100 may recommend the use of a transport service in another time slot and generate candidate delivery plans for the transport service in question.

FIG. 7 is a flowchart illustrating an example of candidate delivery plan generation processing that is executed by the delivery plan generation support system 100 of Embodiment 1. FIG. 8, FIG. 9A, FIG. 9B, FIG. 9C, FIG. 9D, FIG. 9E, FIG. 9F, and FIG. 9G are diagrams illustrating specific examples of a method for generating a delivery plan by the delivery plan generation support system 100 of Embodiment 1.

The delivery plan generation unit 121 selects a single piece of reservation information from among the pieces of reservation information for cargo received by the request reception unit 120 (Step S201). Hereinafter, the cargo of the selected reservation information is referred to as target cargo.

The delivery plan generation unit 121 refers to the route information 300 to search for a path (combination of routes) for transporting the target cargo from the departure point to the destination, and generates a path graph representing the searched path (Step S202).

For example, when the target cargo is to be transported from a station A, which is the departure point, to a station C, which is the destination, the delivery plan generation unit 121 generates a path graph 800 as illustrated in FIG. 8. Nodes of the path graph represent locations such as stations and stops, and edges represent routes connecting the locations. In the present embodiment, an edge representing a route is referred to as a movement edge.

In the present embodiment, a path graph only including one-way paths is generated, but a path graph including two-way paths may be generated. Note that, when an intermediate point is specified, a path that passes through the intermediate point is searched for.

The delivery plan generation unit 121 generates pairs of nodes connected to each other through edges (Step S203). In the case of the path graph 800, a pair of a node 801 and a node 802 connected to each other through a route 1, a pair of the node 801 and the node 802 connected to each other through a route 2, and a pair of the node 802 and a node 803 connected to each other through a route 3 are generated.

For each pair of nodes, the delivery plan generation unit 121 refers to the route information 300 and generates as many search-use pairs as the number of operation schedules (Step S204). At this time, the delivery plan generation unit 121 sets a movement edge between the node of the departure point and the node of the arrival point of the route forming the search-use pair. As described later, a cost associated with the use of the route is set for the movement edge. Note that the delivery plan generation unit 121 may target operation schedules after the departure time in consideration of the departure time.

For example, when the departure time of the cargo is 13:00 and, for the route 1, there are operation schedules departing at 13:00 and 13:30, search-use pairs 901 and 902 as illustrated in FIG. 9A are generated from the pair of the node 801 and the node 802 connected to each other through the route 1. Further, when, for the route 2, there are operation schedules departing at 13:30 and 14:30, search-use pairs 903 and 904 as illustrated in FIG. 9B are generated from the pair of the node 801 and the node 802 connected to each other through the route 2. Also for the pair of the node 802 and the node 803 connected to each other through the route 3, search-use pairs 911, 912, and 913 as illustrated in FIG. 9C are generated by similar processing.

Hereinafter, the node of the departure point of a search-use pair is referred to as a start node, and the node of the arrival point of the route is referred to as an end node.

The delivery plan generation unit 121 searches for combinations of connectable search-use pairs and sets edges between the search-use pairs (Step S205). This corresponds to transfers between routes. Hereinafter, an edge between search-use pairs is referred to as a transfer edge. As described later, a cost associated with a transfer between routes is set for the transfer edge.

Specifically, the delivery plan generation unit 121 searches for combinations of search-use pairs in which the end node and the start node match and the arrival time at the end node is earlier than the departure time at the start node.

As illustrated in FIG. 9D, for the search-use pair 901, each of the search-use pairs 911, 912, and 913 is searched for as a connectable search-use pair. Further, as illustrated in FIG. 9E, for the search-use pair 902, each of the search-use pairs 912 and 913 is searched for as a connectable search-use pair.

The delivery plan generation unit 121 generates a search-use graph on the basis of the search-use pairs and the transfer edges (Step S206). For example, from the path graph 800, a search-use graph 900 as illustrated in FIG. 9F is generated.

The delivery plan generation unit 121 adds the nodes of the departure point and the destination of the delivery to the search-use graph and sets edges (Step S207). As illustrated in FIG. 9G, for example, for the search-use graph 900, nodes 951 and 952 are set, edges are set between the node 951 and the nodes at the identical location, and edges are set between the node 952 and the nodes at the identical location. In the following description, an edge connecting the nodes of a departure point and a destination is referred to as a waiting edge. As described later, a cost considering waiting time for the collection of cargo and waiting time for the handover of cargo is set for the waiting edge. Note that, when waiting time is not considered, the processing of Step S207 can be omitted.

The delivery plan generation unit 121 optimizes the search-use graph (Step S208).

For example, when the size of the search-use graph is large, the delivery plan generation unit 121 deletes paths with the number of intermediate locations greater than a predetermined number, deletes paths in which time taken for arrival is greater than a predetermined length of time, and deletes paths in which time taken for transfer is greater than a predetermined length of time. Further, the delivery plan generation unit 121 may delete edges in the reverse direction. Moreover, the delivery plan generation unit 121 may narrow down paths on the basis of the distance or the arrival time.

Next, the evaluation unit 122 sets the costs for the edges of the search-use graph (Step S209). The method for setting the costs for edges is set from different perspectives for each of movement edges, transfer edges, and waiting edges. Now, the method for setting the costs for edges is described.

First, the method for setting the costs for movement edges is described. For movement edges, the costs for the three parties including transportation operators, consignors, and passengers are set.

The cost for transportation operators is calculated using a function $y_1$, in which the explanatory variable is satisfaction $x_{11}$ corresponding to an increase in revenue associated with the transport of cargo. The satisfaction $x_{11}$ is calculated using Equation (1), for example. Here, S is a constant. I represents revenue per route, and $\Delta I$ represents the amount of increase in revenue associated with the transport of cargo.

[Math. 1]

$$S + \frac{\Delta I}{I} \dots (1)$$

The cost for passengers is calculated using a function $y_2$, in which the explanatory variables are tolerance $x_{21}$ for vehicle congestion and tolerance $x_{22}$ for being unable to sit due to the transport of cargo. The tolerance $x_{21}$ is calculated using Equation (2), for example, and the tolerance $x_{22}$ is calculated using Equation (3), for example. Here, A is a constant, and R represents a congestion level. $S_{sit}$ and $S_{stand}$ are constants, and $r_{sit}$ represents the ratio of passengers who can sit. $r_{sit}$ is a function dependent on the congestion level of a vehicle. Note that the value of A may be changed depending on weather.

[Math. 2]

$$A * (1 - R) \dots (2)$$

[Math. 3]

$$S_{sit} * r_{sit} + S_{stand} * (1 - r_{sit}) \dots (3)$$

The cost for consignors is calculated using a function $y_3$, in which the explanatory variables are satisfaction $x_{31}$ for transport time and satisfaction $x_{32}$ for environmental consideration during transport. The satisfaction $x_{31}$ is calculated using Equation (4), for example. Here, $\Delta t$ represents the difference between a desired departure time and an actual departure time. The satisfaction $x_{32}$ is calculated using Equation (5), for example. Here, $U_{actual}$ is the amount of CO2 emissions generated during transport, and $U_{worst}$ represents the maximum amount of CO2 emissions.

[Math. 4]

$$1 - \frac{\Delta t}{2} \dots (4)$$

[Math. 5]

$$1 - \frac{U_{actual}}{U_{worst}} \dots (5)$$

Note that a comprehensive cost may be set for a movement edge. A comprehensive cost Y is calculated using Equation (6). Here, B1, B2, and B3 are constants representing weights.

[Math. 6]

$$Y = B_1 y_1 + B_2 y_2 + B_3 y_3 \dots (6)$$

In the present embodiment, the comprehensive cost Y is calculated as the total value of the costs, but the comprehensive cost may be calculated by any method, such as using the maximum value or average value of the costs assigned to the edges. Note that the above-described cost calculation method is an example, and the present embodiment is not limited thereto.

Next, the method for setting the costs for transfer edges is described. For transfer edges, the costs for the three parties including transportation operators, consignors, and passengers are set. Since the movement of cargo involving transfers between routes does not affect the satisfaction of passengers, the cost for passengers is set to 0.

The cost for transportation operators is calculated using the function $y_1$, in which the explanatory variable is the tolerance $x_{11}$ for an increase in labor cost associated with the transport of cargo. The tolerance $x_{11}$ is calculated using Equation (7), for example. Here, C represents the labor cost required when cargo is not

transported, and $\Delta C$ represents the amount of increase in labor cost associated with the transport of cargo. In the present embodiment, it is assumed that the transportation operator is responsible for the transshipment work of cargo during transfer, and the labor cost increases due to the transshipment work.
[Math. 7]

$$1 - \frac{\Delta C}{C} \dots (7)$$

The cost for consignors is calculated using the function $y_3$, in which the explanatory variable is the satisfaction $x_{31}$ for the time required for transfer. The satisfaction $x_{31}$ is calculated using Equation (8), for example. Here, T represents the waiting time for transfer. B is a constant representing a weight. The weight is set depending on cargo characteristics. For example, if cargo is fresh food, the value of the weight is large because the cargo deteriorates with the passage of time. If cargo is a component, the weight is 0 because the cargo does not deteriorate with the passage of time. In the equation of the present embodiment, the satisfaction decreases linearly with the passage of time, but the equation may be switched depending on the characteristics of deterioration, such as when significant deterioration occurs after a certain period of time, for example.
[Math. 8]

$$1 - B \times T \dots (8)$$

Note that a comprehensive cost may be set for a transfer edge. The comprehensive cost Y is calculated using Equation (9). Here, B1 and B3 are constants representing weights.
[Math. 9]

$$Y = B_1 y_1 + B_3 y_3 \dots (9)$$

In the present embodiment, the comprehensive cost Y is calculated as the total value of the costs, but the comprehensive cost may be calculated by any method, such as using the maximum value or average value of the costs assigned to the edges. Note that the above-described cost calculation method is an example, and the present embodiment is not limited thereto.

Next, the method for setting the costs for waiting edges is described. For waiting edges, the costs for the three parties including transportation operators, consignors, and passengers are set. Since the waiting time for the receipt and dispatch of cargo affects only the satisfaction of consignors, the costs for transportation operators and passengers are set to 0.

The cost for consignors is calculated using the function $y_3$, in which the explanatory variable is the satisfaction $x_{31}$ for the time required for departure or arrival. The satisfaction $x_{31}$ is calculated using Equation (10), for example. Here, T represents the waiting time from arrival at a departure station to actual departure or the waiting time from arrival at a station to reception by a recipient. B is a constant representing a weight. The weight is set depending on cargo characteristics. For example, if cargo is fresh food, the value of the weight is large because the cargo deteriorates with the passage of time. If cargo is a component, the weight is 0 because the cargo does not deteriorate with the passage of time. In the equation of the present embodiment, the satisfaction decreases linearly with the passage of time, but the equation may be switched depending on the characteristics of deterioration, such as when significant deterioration occurs after a certain period of time, for example.
[Math. 10]

$$1 - B \times T \dots (10)$$

Note that a comprehensive cost may be set for a waiting edge. The comprehensive cost Y is calculated using Equation (11). Here, B3 is a constant representing a weight.
[Math. 11]

$$Y = B_3 y_3 \dots (11)$$

Note that the above-described cost calculation method is an example, and the present embodiment is not limited thereto.

Further, the above-described methods for setting the costs for each edge are examples, and the present embodiment is not limited thereto. The satisfaction of all three parties may be considered, or the satisfaction of only one or two parties may be considered. Note that the cost setting may be executed simultaneously with the edge setting.

The evaluation unit 122 executes a path search using the search-use graph having the costs assigned thereto, and generates a delivery plan (candidate delivery plan) (Step S210).

The evaluation unit 122 uses a known path search method such as Dijkstra's algorithm, for example, to search for a path in which the evaluation index calculated using the costs for the three parties assigned to the edges is maximized or minimized. Since the nodes and the edges included in the path of the search-use graph correspond to the locations and the operation schedules, a delivery plan can be generated from the path. The evaluation index is, for example, the total value of the costs for the edges included in the path. Note that the evaluation unit 122 may search for a path focusing only on the cost for any of transportation operators, passengers, and consignors.

Note that the evaluation unit 122 may select a predetermined number of paths on the basis of the evaluation index. The transportation operator sets the threshold of the evaluation index as a control parameter in the control information 110, and sets a constraint condition of the evaluation index using this threshold in the control information 110.

The evaluation unit 122 determines whether processing for reservation information for all pieces of cargo has been completed or not (Step S211). If processing for reservation information for all pieces of cargo has not been completed, the evaluation unit 122 returns to Step S201 and executes similar processing.

If processing for reservation information for all pieces of cargo has been completed, the evaluation unit 122 generates display information (Step S212) and outputs the display information to the notification unit 123 (Step S213).

For example, when the evaluation unit 122 selects a plurality of delivery plans, the evaluation unit 122 generates display information including the delivery plans sorted on the basis of the evaluation index. For example, the delivery plans are sorted in descending order of the evaluation index. The notification unit 123 transmits the display information to the terminal 101-1 operated by the transportation operator.

Note that, through the adjustment of the weights and the thresholds, a delivery plan that places emphasis on any of passengers, consignors, and transportation operators can be generated. Further, also in the calculation of the evaluation index, through the adjustment of the weights, an evaluation index that places emphasis on any of the explanatory variables can be calculated. For example, when making a cargo reservation, the consignor may be allowed to select which of "transport time" and "environmental consideration" is to be emphasized, and the cost for the consignor may be set accordingly. In such a case, an evaluation index may be calculated through the assignment of a weight to the selected explanatory variable.

Further, costs may be set for each transportation operator, and the cost for transportation operators to be used for evaluation may be calculated on the basis of the costs for the respective transportation operators. For example, the sum, average, maximum value, or minimum value of the costs for the respective transportation operators may be used as the cost for transportation operators to be used for evaluation.

According to Embodiment 1, the delivery plan generation support system 100 can quantitatively evaluate the degrees of fulfillment of the requirements of the three parties including passengers, cargo transport requesters, and transportation operators, by using explanatory variables representing the satisfaction or dissatisfaction of passengers, consignors, and transportation operators with respect to movement, transfer, and waiting in the transport of cargo, to thereby generate a delivery plan. Further, the delivery plan generation support system 100 can present a delivery plan selected on the basis of evaluation indices and thereby support the generation of a delivery plan meeting the requirements of the three parties as much as possible.

[Embodiment 2]

Embodiment 2 is different from Embodiment 1 in that a dedicated transshipment operator, instead of the transportation operator, is responsible for the transshipment work of cargo during transfer. Now, Embodiment 2 is described focusing on the difference from Embodiment 1.

FIG. 10 is a diagram illustrating an example of a system configuration of Embodiment 2. In Embodiment 2, in addition to the system configuration of Embodiment 1, a terminal 101-3 that is operated by the transshipment operator is added. It is assumed that there are a plurality of transshipment operators. The hardware configuration is identical to that of Embodiment 1.

FIG. 11 is a sequence diagram illustrating a flow of processing in the system of Embodiment 2. The difference from Embodiment 1 is that, after the transportation operator refers to candidate delivery plans and transmits an adaptation notification including the identification number of the selected candidate delivery plan to the delivery plan generation support system 100 (Step S105), the delivery plan generation support system 100 transmits request information for transshipment work to the terminal 101-3 of the transshipment operator (Step S151). The request information for transshipment work includes the location where the transshipment occurs, vehicle information and an arrival time of the vehicle from which the transshipment is made, vehicle information and a departure time of the vehicle to which the transshipment is made, and details of the cargo. The transshipment operator checks the request information and transmits, in the case of accepting the request, an acceptance notification to the delivery plan generation support system 100 (Step S152). In a case where there is no transshipment operator who accepts the request, the delivery plan generation support system 100 transmits the fact that the cargo transport is not possible to the consignor.

Delivery plan generation processing that is executed by the delivery plan generation support system 100 of Embodiment 2 is identical to that of Embodiment 1. However, the method for setting the costs for candidate delivery plans is partially different. The methods for setting the costs for movement edges and waiting edges are identical to those of Embodiment 1, but the method for setting the costs for transfer edges is different.

As the costs to be assigned to transfer edges, the costs for two parties including transshipment operators and consignors are set. Since transfers that occur during the movement of cargo do not affect the satisfaction of passengers and transportation operators, the costs for the two parties are considered.

The evaluation index for transshipment operators is calculated using a function $y_4$, in which the explanatory variable is the tolerance $x_{11}$ for an increase in labor cost associated with the transport of cargo. The tolerance $x_{41}$ is set to 1, for example, when work can be performed continuously with other already requested transshipment work, and decreases depending on the length of free time from other transshipment work.

The evaluation index for consignors is identical to that of Embodiment 1 and is calculated using the function $y_3$, in which the explanatory variable is the satisfaction $x_{31}$ for the time required for transfer. The satisfaction $x_{31}$ is calculated using Equation (8), for example.

Note that a comprehensive cost may be set for a waiting edge. The comprehensive cost Y is calculated using Equation (12). Here, B4 and B3 are constants representing weights.
[Math. 12]

$$Y = B_4 y_4 + B_3 y_3 \dots (12)$$

In the present embodiment, the comprehensive cost Y is calculated as a total value, but the comprehensive evaluation index may be calculated by any method, such as using the maximum value or average value of the costs.

Note that the above-described evaluation index calculation method is an example, and the present embodiment is not limited thereto.

Note that the present invention is not limited to the above-described embodiments and includes various modifications. Further, for example, the above-described embodiments are described in detail in order to facilitate understanding of the present invention, and are not necessarily limited to ones including all of the described configurations. Moreover, some configurations of each embodiment can be added to, deleted from, or replaced with other configurations.

In addition, each of the above-described configurations, functions, processing units, processing means, and the like may be achieved in hardware by designing some or all thereof as an integrated circuit, for example. Further, the present invention can also be achieved by a program code of software for achieving the functions of the embodiments. In this case, a storage medium having the program code recorded thereon is provided to a computer, and a processor included in that computer reads the program code stored in the storage medium. In this case, the program code itself read from the storage medium achieves the functions of the embodiments described above, and the program code itself, as well as the storage medium having the program code stored therein, form the present invention. As the storage medium for supplying such a program code, for example, a flexible disk, a CD-ROM, a DVD-ROM, a hard disk, an SSD (Solid State Drive), an optical disc, a magneto-optical disk, a CD-R, a magnetic tape, a non-volatile memory card, a ROM, or the like is used.

Further, the program code for achieving the functions described in the present embodiment can be implemented in a wide range of programming or scripting languages, such as assemblers, C/C++, Perl, Shell, PHP, Python, or Java.

Moreover, the program code of software for achieving the functions of the embodiments may be distributed via a network to store the program code in storage means such as a hard disk or a memory of a computer or in a storage medium such as a CD-RW or a CD-R, and a processor included in the computer may read and execute the program code stored in the storage means or the storage medium.

In the above-described embodiments, the control lines and the information lines considered to be necessary for description are described, and not all control lines or information lines required for a product are necessarily described. All configurations may be connected to each other.

**Claims**

1. A computer system configured to generate a delivery plan for cargo using a vehicle configured to transport a passenger and cargo, the computer system comprising:

   at least one computer including a processor, a storage device connected to the processor, and a network interface connected to the processor, wherein

   the computer system is communicably connected to a first terminal that is operated by a requester who requests transport of cargo and a second terminal that is operated by a business operator who provides a transport service using a vehicle,

   the computer system is configured to retain route information regarding routes of the vehicle that is operated by the business operator,

   the computer system is configured to execute

      first processing of receiving a reservation for transport of cargo, the reservation including a departure point and a destination,
      second processing of searching for a path including a combination of the routes from the departure point to the destination on a basis of the route information and generating a path graph including location nodes corresponding to intermediate points of the path and a route edge connecting the intermediate points between which the vehicle is movable using a corresponding one of the routes,

third processing of generating a search-use graph from the path graph, and
fourth processing of generating a delivery plan including a waypoint, a route, and an operation schedule with use of the search-use graph,

in the third processing, the computer system is configured to generate, on a basis of the path graph and the route information, the search-use graph which includes a node and an edge that correspond to an operation schedule of a corresponding one of the routes and a transfer between the routes and in which a first cost representing a degree of satisfaction of a requirement of the requester, a second cost representing a degree of satisfaction of a requirement of the business operator, and a third cost representing a degree of satisfaction of a requirement of the passenger are set for the edge, and,
in the fourth processing, the computer system is configured to

search for a path from the search-use graph on a basis of an evaluation index that is calculated using the first cost, the second cost, and the third cost which are set for the edge and that represents a degree of comprehensive satisfaction of the passenger, the requester, and the business operator,
generate the delivery plan with use of the path searched, and
transmit the delivery plan to the second terminal.

2. The computer system according to claim 1, wherein, in the third processing, the computer system is configured to

generate, from the path graph, a pair including a start node and an end node that correspond to the location nodes connected to each other through the route edge,
generate, for each of the pairs, as many search-use pairs as number of the operation schedules of the routes to be used for movement from the start node to the end node, the search-use pairs each including the start node and the end node,
set a movement edge connecting the start node to the end node that form a corresponding one of the search-use pairs,
set, for the movement edge, the first cost, the second cost, and the third cost which are associated with movement and which represent the degrees of satisfaction of the respective requirements of the requester, the business operator, and the passenger,
search for a combination of the search-use pairs in which the end node of one of the search-use pairs matches the start node of another of the search-use pairs and set a transfer edge connecting the end node of the one of the search-use pairs to the start node of the one of the search-use pairs, and
set, for the transfer edge, the first cost, the second cost, and the third cost which are associated with transfer and which represent the degrees of satisfaction of the respective requirements of the requester, the business operator, and the passenger.

3. The computer system according to claim 2, wherein, in the third processing, the computer system is configured to

add a node of the departure point,
set a first waiting edge connecting the node of the departure point to each of the search-use pairs including the start node corresponding to the departure point,
set, for the first waiting edge, the first cost, the second cost, and the third cost which are associated with waiting time for collection of the cargo and which represent the degrees of satisfaction of the respective requirements of the requester, the business operator, and the passenger,
add a node of the destination,
set a second waiting edge connecting the node of the destination to each of the search-use pairs including the end node corresponding to the destination, and
set, for the second waiting edge, the first cost, the second cost, and the third cost which are associated with waiting time for handover of the cargo and which represent the degrees of satisfaction of the respective requirements of the requester, the business operator, and the passenger.

4. A method for generating a delivery plan for cargo using a vehicle configured to transport a passenger and cargo, the method being executed by a computer system,

the computer system

including at least one computer including a processor, a storage device connected to the processor, and a network interface connected to the processor,
being communicably connected to a first terminal that is operated by a requester who requests transport of cargo and a second terminal that is operated by a business operator who provides a transport service using a vehicle, and
retaining route information regarding routes of the vehicle that is operated by the business operator,

the method for generating a delivery plan comprising:

a first step of receiving, by the computer system, a reservation for transport of cargo, the reservation including a departure point and a destination;
a second step of searching, by the computer system, for a path including a combination of the routes from the departure point to the destination on a basis of the route information and generating, by the computer system, a path graph including location nodes corresponding to intermediate points of the path and a route edge connecting the intermediate points between which the vehicle is movable using a corresponding one of the routes;
a third step of generating, by the computer system, a search-use graph from the path graph; and
a fourth step of generating, by the computer system, a delivery plan including a waypoint, a route, and an operation schedule with use of the search-use graph,

wherein

the third step includes a step of generating, by the computer system, on a basis of the path graph and the route information, the search-use graph which includes a node and an edge that correspond to an operation schedule of a corresponding one of the routes and a transfer between the routes and in which a first cost representing a degree of satisfaction of a requirement of the requester, a second cost representing a degree of satisfaction of a requirement of the business operator, and a third cost representing a degree of satisfaction of a requirement of the passenger are set for the edge, and
the fourth step includes

a step of searching, by the computer system, for a path from the search-use graph on a basis of an evaluation index that is calculated using the first cost, the second cost, and the third cost which are set for the edge and that represents a degree of comprehensive satisfaction of the passenger, the requester, and the business operator,
a step of generating, by the computer system, the delivery plan with use of the path searched, and
a step of transmitting, by the computer system, the delivery plan to the second terminal.

5. The method for generating a delivery plan according to claim 4, wherein
the third step includes

a step of generating, by the computer system, from the path graph, a pair including a start node and an end node that correspond to the location nodes connected to each other through the route edge,
a step of generating, by the computer system, for each of the pairs, as many search-use pairs as number of the operation schedules of the routes to be used for movement from the start node to the end node, the search-use pairs each including the start node and the end node,
a step of setting, by the computer system, a movement edge connecting the start node to the end node that form a corresponding one of the search-use pairs,
a step of setting, by the computer system, for the movement edge, the first cost, the second cost, and the third cost which are associated with movement and which represent the degrees of satisfaction of the respective requirements of the requester, the business operator, and the passenger,
a step of searching, by the computer system, for a combination of the search-use pairs in which the end node of one of the search-use pairs matches the start node of another of the search-use pairs and setting, by the computer system, a transfer edge connecting the end node of the one of the search-use pairs to the start node of the one of the search-use pairs, and
a step of setting, by the computer system, for the transfer edge, the first cost, the second cost, and the third cost which are associated with transfer and which represent the degrees of satisfaction of the respective requirements of the requester, the business operator, and the passenger.

6. The method for generating a delivery plan according to claim 5, wherein
the third step includes

a step of adding, by the computer system, a node of the departure point,
a step of setting, by the computer system, a first waiting edge connecting the node of the departure point to each of the search-use pairs including the start node corresponding to the departure point,

a step of setting, by the computer system, for the first waiting edge, the first cost, the second cost, and the third cost which are associated with waiting time for collection of the cargo and which represent the degrees of satisfaction of the respective requirements of the requester, the business operator, and the passenger,

a step of adding, by the computer system, a node of the destination,

a step of setting, by the computer system, a second waiting edge connecting the node of the destination to each of the search-use pairs including the end node corresponding to the destination, and

a step of setting, by the computer system, for the second waiting edge, the first cost, the second cost, and the third cost which are associated with waiting time for handover of the cargo and which represent the degrees of satisfaction of the respective requirements of the requester, the business operator, and the passenger.

# FIG.1

DELIVERY PLAN GENERATION SUPPORT SYSTEM — 100

CONTROL INFORMATION — 110

DELIVERY PLAN GENERATION UNIT — 121

REQUEST RECEPTION UNIT — 120

EVALUATION UNIT — 122

NOTIFICATION UNIT — 123

TERMINAL (TRANSPORTATION OPERATOR) — 101-1

TERMINAL (CONSIGNOR) — 101-2

# FIG.2

COMPUTER — 200

MAIN STORAGE DEVICE — 202

PROCESSOR — 201

SECONDARY STORAGE DEVICE — 203

NW IF — 204

# FIG.3A

| ROUTE ID 301 | VEHICLE TYPE 302 | ROUTE 303 | OPERATION SCHEDULE 304 |
|---|---|---|---|
| 1 | RAILWAY | STATION A → STATION X | STATION A: 0530; STATION B: 0545; ...; STATION X: 0655 |
| 2 | BUS | STATION A → STATION X | STATION A: 0542; E: 0557; ...; STATION X 0707 |
| ⋮ | ⋮ | ⋮ | ⋮ |

300

14

# FIG.3B

| ROUTE ID | DEPARTURE TIME | CONGESTION LEVEL |
|----------|----------------|------------------|
| 1 | 0530 | 55 |
| ⋮ | ⋮ | ⋮ |

311   312   313   310

# FIG.4

| TERMINAL (TRANSPORTATION OPERATOR) | TERMINAL (CONSIGNOR) | DELIVERY PLAN GENERATION SUPPORT SYSTEM |
|---|---|---|

101-1   101-2   100

CONTROL INFORMATION ........................ S101

TRANSPORT RESERVATION ........................ S102

S103

CANDIDATE DELIVERY PLAN GENERATION PROCESSING

DISPLAY INFORMATION   S104

ADOPTION NOTIFICATION   S105

TRANSPORT SERVICE INFORMATION   S106

RESPONSE   S107

# FIG.5

500

| | |
|---|---|
| LOADING LOCATION | STATION A ~501 |
| UNLOADING LOCATION | STATION X ~502 |
| DESIRED DEPARTURE TIME | DEPARTURE FROM STATION A AT 13:00 ▼ ~503 |
| CONSIGNOR ID | 1 ~504 |

RESERVATION ~505

# FIG.6

600

| SELECTION | NO | DELIVERY PLAN | EVALUATION INDEX | | | |
|---|---|---|---|---|---|---|
| | | | PASSENGER | CONSIGNOR | TRANSPORTATION OPERATOR | COMPREHENSIVE |
| ● | 9 | STATION A → STATION C → STATION F → STATION X; DEPARTING AT 13:00, ARRIVING AT 13:30; | 0.5 | 0 | 1 | 1.5 |
| ○ | 1 | STATION A → STATION C → STATION L → STATION N → STATION X; DEPARTING AT 13:30, ARRIVING AT 13:35; | 0.8 | 0 | 1 | 1.8 |
| ⋮ | ⋮ | ⋮ | ⋮ | ⋮ | ⋮ | ⋮ |

611 612 613 614 610

ADOPTION 620

EP 4 693 124 A1

# FIG.7

```
                    ┌──────────────┐
                    │    START     │
                    └──────┬───────┘
                           ▼
        ┌──────────────────────────────────┐
        │  SELECT RESERVATION INFORMATION   │ ～S201
        │            FOR CARGO              │
        └──────────────┬───────────────────┘
                       ▼
        ┌──────────────────────────────────┐
        │ SEARCH FOR PATH CAPABLE OF        │ ～S202
        │ TRANSPORTING CARGO AND GENERATE   │
        │ PATH GRAPH                        │
        └──────────────┬───────────────────┘
                       ▼
        ┌──────────────────────────────────┐
        │     GENERATE PAIR OF NODES        │ ～S203
        └──────────────┬───────────────────┘
                       ▼
        ┌──────────────────────────────────┐
        │    GENERATE SEARCH-USE PAIRS      │ ～S204
        └──────────────┬───────────────────┘
                       ▼
        ┌──────────────────────────────────┐
        │ SEARCH FOR COMBINATION OF         │ ～S205
        │ CONNECTABLE SEARCH-USE PAIRS AND  │
        │ SET EDGES                         │
        └──────────────┬───────────────────┘
                       ▼
        ┌──────────────────────────────────┐
        │    GENERATE SEARCH-USE GRAPH      │ ～S206
        └──────────────┬───────────────────┘
                       ▼
        ┌──────────────────────────────────┐
        │   ADD NODES FOR DEPARTURE POINT   │ ～S207
        │   AND DESTINATION OF DELIVERY     │
        └──────────────┬───────────────────┘
                       ▼
        ┌──────────────────────────────────┐
        │    OPTIMIZE SEARCH-USE GRAPH      │ ～S208
        └──────────────┬───────────────────┘
                       ▼
        ┌──────────────────────────────────┐
        │ SET COST FOR EDGES OF             │ ～S209
        │ SEARCH-USE GRAPH                  │
        └──────────────┬───────────────────┘
                       ▼
        ┌──────────────────────────────────┐
        │     EXECUTE PATH SEARCH AND       │ ～S210
        │     GENERATE DELIVERY PLAN        │
        └──────────────┬───────────────────┘
                       ▼
                  ╱─────────╲           ～S211
         NO      ╱  HAS       ╲
        ◄───────< PROCESSING   >
                  ╲  FOR ALL   ╱
                   ╲ PIECES   ╱
                    ╲COMPLETED╱
                      ╲───╱
                       │ YES
                       ▼
        ┌──────────────────────────────────┐
        │   GENERATE DISPLAY INFORMATION    │ ～S212
        └──────────────┬───────────────────┘
                       ▼
        ┌──────────────────────────────────┐
        │    OUTPUT DISPLAY INFORMATION     │ ～S213
        └──────────────┬───────────────────┘
                       ▼
                 ┌──────────┐
                 │   END    │
                 └──────────┘
```

FIG.8

ROUTE 1

801

STATION A

802

STATION B

ROUTE 3

803

STATION C

800

ROUTE 2

FIG.9A

ROUTE 1

801

STATION A

802

STATION B

901

ROUTE 1

STATION A — STATION B

13:00                    13:30

902

ROUTE 1

STATION A — STATION B

13:30                    14:00

FIG.9B

801

STATION A

802

STATION B

ROUTE 2

903

ROUTE 2

STATION A — STATION B

13:30                    14:30

904

ROUTE 2

STATION A — STATION B

14:00                    15:00

# FIG.9C

STATION B ─ ROUTE 3 ─ STATION C

802 ─ STATION B ─ ROUTE 3 ─ STATION C ─ 803

911
STATION B ── ROUTE 3 ── STATION C
14:00          15:00

912
STATION B ── ROUTE 3 ── STATION C
16:00          17:00

913
STATION B ── ROUTE 3 ── STATION C
17:00          18:00

# FIG.9D

911
STATION B ── ROUTE 3 ── STATION C
14:00          15:00

901
STATION A ── ROUTE 1 ── STATION B
13:00          13:30

912
STATION B ── ROUTE 3 ── STATION C
16:00          17:00

913
STATION B ── ROUTE 3 ── STATION C
17:00          18:00

# FIG.9E

# FIG.9F

FIG. 9G

900

951

952

STATION A

STATION A 13:00
STATION A 13:30
STATION A 13:30
STATION A 14:00

ROUTE 1
ROUTE 1
ROUTE 2
ROUTE 2

STATION B 13:30
STATION B 14:00
STATION B 14:30
STATION B 15:00

STATION B 14:00
STATION B 16:00
STATION B 17:00

ROUTE 3
ROUTE 3
ROUTE 3

STATION C 15:00
STATION C 17:00
STATION C 18:00

STATION C

FIG.10

DELIVERY PLAN GENERATION SUPPORT SYSTEM                                                  ~100

~110

CONTROL
INFORMATION

~121

DELIVERY PLAN
GENERATION UNIT

~120

REQUEST
RECEPTION UNIT

~122

EVALUATION UNIT

~123

NOTIFICATION UNIT

TERMINAL
(TRANSPORTATION
OPERATOR)
~101-1

TERMINAL
(TRANSSHIPMENT
OPERATOR)
~101-3

TERMINAL
(CONSIGNOR)
~101-2

# FIG.11

## INTERNATIONAL SEARCH REPORT

| International application No. |
|---|
| **PCT/JP2024/004565** |

**A.      CLASSIFICATION OF SUBJECT MATTER**

*G06Q 10/047*(2023.01)i; *G06Q 50/40*(2024.01)i
FI:    G06Q10/047; G06Q50/40

According to International Patent Classification (IPC) or to both national classification and IPC

**B.      FIELDS SEARCHED**

Minimum documentation searched (classification system followed by classification symbols)

G06Q10/047; G06Q50/40

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C.      DOCUMENTS CONSIDERED TO BE RELEVANT**

| Category* | Citation of document, with indication, where appropriate, of the relevant passages | Relevant to claim No. |
|---|---|---|
| A | WO 2022/162935 A1 (NEC CORPORATION) 04 August 2022 (2022-08-04)<br>entire text, all drawings | 1-6 |
| A | JP 2019-57039 A (YAHOO JAPAN CORPORATION) 11 April 2019 (2019-04-11)<br>entire text, all drawings | 1-6 |
| A | JP 2017-220090 A (DENSO CORPORATION) 14 December 2017 (2017-12-14)<br>entire text, all drawings | 1-6 |

☐ Further documents are listed in the continuation of Box C.       ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **28 February 2024** | **12 March 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**INTERNATIONAL SEARCH REPORT**
Information on patent family members

International application No.

**PCT/JP2024/004565**

| Patent document cited in search report | | | Publication date (day/month/year) | Patent family member(s) | Publication date (day/month/year) |
|---|---|---|---|---|---|
| WO | 2022/162935 | A1 | 04 August 2022 | (Family: none) | |
| JP | 2019-57039 | A | 11 April 2019 | (Family: none) | |
| JP | 2017-220090 | A | 14 December 2017 | (Family: none) | |

Form PCT/ISA/210 (patent family annex) (July 2022)

**EP 4 693 124 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2023048376 A
- JP 2017220090 A